# EUROPÄISCHE PATENTSCHRIFT

(11) **EP 1 112 007 B1**
(45) Veröffentlichungstag und Bekanntmachung des Hinweises auf die Patenterteilung: **20.11.2002**
(21) Anmeldenummer: 99952449.9
(22) Anmeldetag: 12.08.1999
(51) Int. Cl.: A23L 2/04, A23L 2/46, A23L 2/42, A23L 2/08, A23N 7/00

(54) **VERFAHREN ZUR HERSTELLUNG VON ANANASSAFT UND ANANASSAFTKONZENTRAT**
METHOD FOR PRODUCING PINEAPPLE JUICE AND PINEAPPLE JUICE CONCENTRATE
PROCEDE DE PRODUCTION DE JUS D'ANANAS ET DE CONCENTRE DE JUS D'ANANAS

(30) Priorität: 08.09.1998 DE 19842108
(43) Veröffentlichungstag der Anmeldung: 04.07.2001
(73) Patentinhaber: WeserGold Getränkeindustrie GmbH & Co. KG, 31737 Rinteln (DE)
(72) Erfinder: HARTINGER, Richard, D-31737 Rinteln (DE)
(74) Vertreter: UEXKÜLL & STOLBERG
(86) Internationale Anmeldenummer: EP9905817
(87) Internationale Veröffentlichungsnummer: WO00013530

(56) Entgegenhaltungen:
- DE-A- 2 822 934
- US-A- 3 699 001
- US-A- 4 738 194
- PATENT ABSTRACTS OF JAPAN vol. 005, no. 071 (C-054), 13. Mai 1981 (1981-05-13) & JP 56 021582 A (SAPPORO BREWERIES LTD), 28. Februar 1981 (1981-02-28)

## Beschreibung

Die Erfindung betrifft ein Verfahren zur Herstellung von Ananassaft und Ananassaftkonzentrat, um die Fruchtsaftausbeute zu erhöhen und die Qualität des Ananassaftes bzw. des Ananassaftkonzentrates zu verbessern.

Der größte Teil der Ananassaftproduktion entsteht bei der Verarbeitung von Ananasfrüchten zu Konserven, wobei Ananassaft bzw. Ananassaftkonzentrat als Nebenprodukte abfallen. Bei der Verarbeitung der Früchte wird der Ananassaft aus der faserreichen Mittelachse der Früchte, aus dem an der Schale hängenden Fruchtfleisch, den ungeeigneten Scheiben und Würfeln, dem während der Verarbeitung ablaufenden Ananassaft sowie aus kleinen Früchten gewonnen, die für die Herstellung von Ananasscheiben nicht geeignet sind.

Der aus den Reststoffen der Konservenherstellung gewonnene Saft ist häufig von geringer Qualität und kann daher für die Herstellung von Fruchtsäften nur bedingt eingesetzt werden.

Bei der Herstellung von Ananassäften aus kleinen, ganzen Früchten werden die Früchte in einer Maschine geschnitten und anschließend entsaftet, indem die geschnittenen Früchte zwischen eine Entsaftungstrommel und eine perforierte Wand transportiert und dann gegen die perforierte Wand gepreßt werden, so daß der Saft herausfließt, ohne daß Teile der Fruchtschale mitgeführt werden. Der so gewonnene Saft wird dann durch ein feines Sieb passiert, mit Hilfe von Pasteurisation haltbar gemacht und gegebenenfalls zu Fruchtsaftkonzentrat weiterverarbeitet. Die Saftausbeute bei diesem Verfahren korreliert mit dem angewendeten Pressdruck und beträgt etwa 50 %.

Ein Problem bei der Herstellung von Ananassaft nach diesem Verfahren besteht darin, daß in der Schale von Ananasfrüchten ein Pflanzensaft mit unerwünschten Inhaltsstoffen enthalten ist. Bei Anwendung eines höheren Pressdruckes zur Steigerung der Ausbeute kann dieser Pflanzensaft verstärkt in den Fruchtsaft gelangen, der dadurch in Farbe und Geschmack negativ verändert wird. Der resultierende Saft bekommt unter anderem einen grasigen Geschmack und ist graugrünlich verfärbt. Die durch Steigerung des Pressdruckes maximal erzielbare Saftausbeute ist durch diese nachteilige Qualitätsbeeinflussung begrenzt.

Ein weiteres Problem besteht darin, daß Ananassäfte, die nach den bekannten Verfahren hergestellt sind, häufig eine nur geringe Trübungsstabilität haben und innerhalb kürzester Zeit vollständig ausklaren.

Bei der Trübungsstabilität spielen die im Ananassaft enthaltenen Trubpartikel eine wichtige Rolle. Dieser Trub läßt sich in Grobtrub und Feintrub unterteilen. Der Grobtrub sedimentiert aufgrund seiner vergleichsweise hohen Partikelgröße sehr leicht.

Ananassäfte enthalten zumeist große Mengen an Grobtrub, der einen mittleren Partikeldurchmesser von etwa 100 µm hat. Dieser Wert ist beispielsweise um den Faktor 10 höher als bei trüben Apfelsäften und liegt von der Größe her im Faserbereich. Der Ananas-Feintrub hingegen liegt mit einer mittleren Partikelgröße von 0,5 µm im gleichen Bereich wie der Feintrube bei trübem Apfelsaft. Die Sinkgeschwindigkeit des Feintrubes ist daher weitaus geringer als die des Grobtrubs.

Folglich sind die hohen Partikelausmaße verantwortlich für die schnelle Sedimentation des Grobtrubs. Es ist zwar kein Problen, den sedimentierten Grobtrub vor dem öffnen der Flasche aufzuschütteln, jedoch ist dieser Mangel allgemein unerwünscht.

Zur Produktion trübungsstabiler Ananassäfte ist es bekannt, die Grobtrubfraktion mit Hilfe von Separatoren aus dem Saft zu entfernen. Nachteil dieses Verfahrens besteht allerdings darin, daß der Ananassaft nach dem Durchlauf durch einen Klärseparator fast vollkommen ausgeklart ist.

Den Herstellern von Ananassaft verbleiben häufig nur noch zwei Möglichkeiten zum Erreichen einer ausreichenden Trübungsstabilität, nämlich die Zerkleinerung von vorhandenem Grobtrub über mechanische Verfahren (Hochdruck-Homogenisation, Kolloidmühlen) und die Zugabe von Verdickungsmitteln, wie beispielsweise Pektin, was allerdings nach der aktuellen EU-Gesetzgebung nicht erlaubt ist.

Es ist folglich **Aufgabe** der vorliegenden Erfindung ein Verfahren zur Herstellung von trübungsstabilem Ananassaft bzw. Ananassaftkonzentrat zu schaffen, bei dem die Ausbeute durch eine verbesserte Entsaftung erhöht wird, ohne daß die Qualität nachteilig beeinflußt wird.

Zur **Lösung** der Aufgabe dienen die Merkmale des Anspruchs 1. Vorteilhafte Ausgestaltungen der Erfindung sind Gegenstand der Unteransprüche.

Mit Hilfe des erfindungsgemäßen Verfahrens wird eine verbesserte sensorische Qualität in Hinblick auf Aroma, Geschmack, Farbe und Trübungsstabilität sowie eine verbesserte ernährungsphysiologische Qualität durch Erhalt der Vitamine erzielt.

Außerdem wird durch eine kontinuierliche Weiterverarbeitung zwischen Maischebereitung und Safterzeugung die Verarbeitungshygiene verbessert und dadurch die mikrobiologische Anfälligkeit des Prozesses verringern.

Als Rohware für das erfindungsgemäße Verfahren dienen gesäuberte Ananasfrüchte ohne Blattkrone. Die Früchte werden wahlweise in unterschiedlicher Sortierung verarbeitet oder der Größe nach sortiert. Zur Abtrennung der Schale werden die Früchte in der äußeren Zone gefrostet. Das Frosten dient zur Härtung der Frucht und zur Versprödung der Fruchtschale für die daran anschließende Entfernung der Schale. Der Gefrierpunkt des Fruchtgewebes liegt nach dem Frosten vorzugsweise bei unter - 3 °C. Für eine gute Schalenenentfernung soll eine Gefrierung von mindestens 2 cm der Randschicht erzielt werden. Vorteilhaft hat sich eine Gefrierung und Abkühlung der Randzone auf ca. - 10 °C bis - 18 °C erwiesen.

Die Frostung kann auf unterschiedlichen Wegen erfolgen, nämlich beispielsweise kontinuierlich in einem mit kryogenen Gasen gekühlten Gefriertunnel bei Temperaturen zwischen etwa - 90 und - 30 °C. Alternativ kann die Frostung auch chargenweise (batchweise) in einem Batchfroster mit kryogenen Gasen bei Temperaturen zwischen - 90 und - 30 °C oder chargenweise in einem Gefrierlager mit einem Kälteaggregat (Verdampfer) bei Temperaturen zwischen - 28 und -18 °C durchgeführt werden.

Die angefrorenen Früchte werden anschließend beispielsweise einer Korundwalzenschälmaschine zugeführt. In dieser Maschine werden ca. 3 - 7 mm der Randschicht der Frucht entfernt, die die unerwünschten Inhaltsstoffe enthält.

Nach dem Schälen werden die Früchte zum Beispiel mit Hilfe einer Reibe oder einer Obstmühle mechanisch zu einer Maische zerkleinert. Zur Steigerung der Trübungsstabilität kann die Maische in einem Homogenisator nochmals feinzerkleinert werden.

Danach wird die Maische in einem Wärmetauscher auf Temperaturen zwischen + 4 und + 15 °C angewärmt und dann mit Hilfe eines Dekanters oder anderer geeigneter Press-Systeme entsaftet, wobei Ananassaft und ein Trester entstehen. Die Verarbeitungstemperatur von etwa + 4 bis etwa + 15 °C liegt damit deutlich niedriger als bei bekannten Verfahren, bei denen die Verarbeitungstemperatur der normalen Umgebungstemperatur von 30 °C und mehr entspricht, da die Verarbeitung der Früchte zumeist in tropischen Gebieten erfolgt. Der Trester kann gegebenfalls in einer weiteren Stufe unter Zusatz von Enzymen nochmals nachentsaftet werden.

Der erzeugte Ananassaft wird dann sofort pasteurisiert und gekühlt. Zur weiteren Haltbarmachung wird der Saft in Fässern eingefroren oder in aseptischen Gebinden verpackt. Alternativ kann der Ananassaft durch Eindampfen konzentriert und daran anschließend in Fässern eingefroren oder in aseptischen Gebinden verpackt werden.

Das erfindungsgemäße Verfahren hat gegenüber dem bekannten technischen Standard folgende Vorteile:
- Durch die Entfernung der Schale und wegen des hohen Zerkleinerungsgrades der Maische kann eine Saftausbeute von über 80 % erzielt werden, und zwar ohne eine wesentliche Beeinträchtigung der sensorischen Qualität des erzeugten Ananassaftes.
- Der hohe Zerkleinerungsgrad der Maische, die niedrigen Verarbeitungstemperaturen sowie eine schnelle und kontinuierliche Arbeitsweise nach der Fruchtzerkleinerung ergeben eine Verbesserung der Trübungsstabilität, und zwar aufgrund von kleineren Trubpartikeln sowie der Verminderung der trubschädigenden enzymatischen Aktivitäten während der Safterzeugung. Wegen der deutlich verminderten Verarbeitungstemperatur wird die Reaktionsgeschwindigkeit der enzymatischen Aktivitäten beträchtlich reduziert.
- Durch niedrige Temperaturen sowie die schnelle und kontinuierliche Arbeitsweise werden die Verarbeitungshygiene verbessert und die mikrobiologische Anfälligkeit vermindert. Außerdem werden Oxidationsreaktionen und dadurch bedingte Farb- und Aromaveränderungen sowie Vitaminschädigungen verringert, wodurch die ernährungsphysiologische Qualität des Produktes erhöht wird.

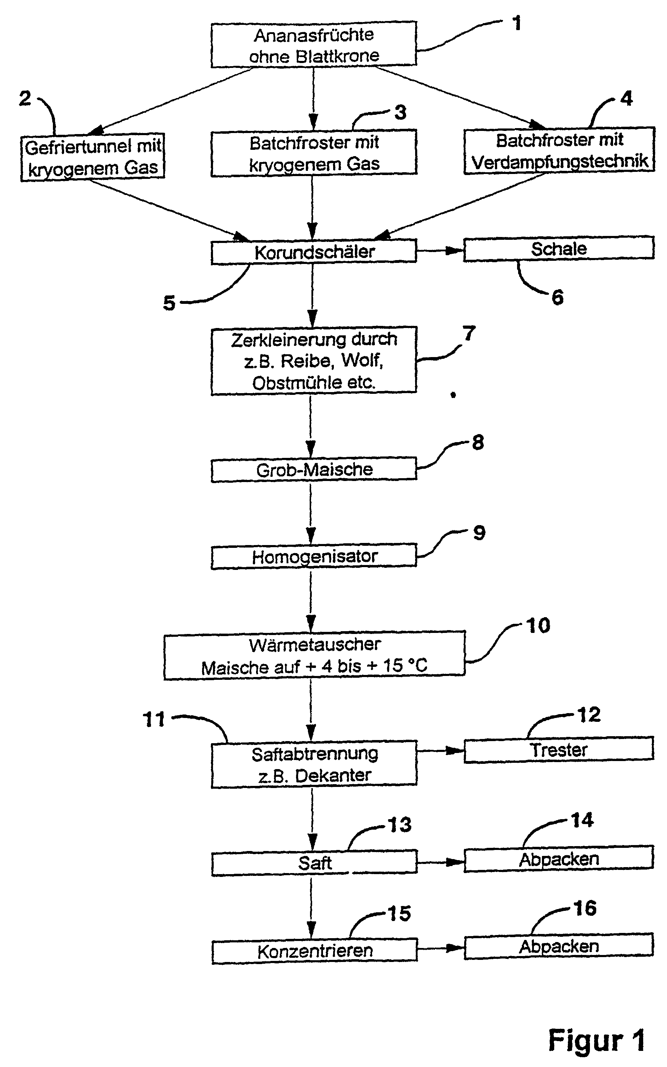

Die vorliegende Erfindung wird nun anhand eines Beispiels unter Bezugnahme auf Figur 1 beschrieben, in der ein Blockdiagramm des erfindungsgemäßen Verfahrens dargestellt ist.

Die gesäuberten und von der Blattkrone befreiten Ananasfrüchte (Block 1) können kontinuierlich einem Gefriertunnel (Block 2) zugeführt werden, wo sie mit Hilfe kryogener Gase bei Temperaturen zwischen etwa - 90 und - 30 °C abgekühlt werden. Alternativ können die Ananasfrüchte in separaten Chargen entweder einem Batchfroster (Block 3), wo sie mit kryogenen Gasen bei Temperaturen zwischen - 90 und - 30 °C abgekühlt werden, oder einem Gefrierlager (Block 4) mit einem Kälteaggregat zugeführt werden, wo sie bei Temperaturen zwischen - 28 und -18 °C gekühlt werden.

Die angefrorenen Früchte werden anschließend einer Korundwalzenschälmaschine (Block 5) zugeführt, wo ca. 3 - 7 mm der Frucht-Randschicht entfernt wird, die die unerwünschten Inhaltsstoffe enthält. Bei diesem Verfahrensschritt fällt die Schale als Abfallprodukt an (Block 6).

Nach dem Entfernen der Randschicht werden die Früchte mit Hilfe einer Reibe oder einer Obstmühle (Block 7) mechanisch zu einer Grob-Maische (Block 8) zerkleinert. Zur Steigerung der Trübungsstabilität kann diese Grob-Maische in einem Homogenisator (Block 9) nochmals feinzerkleinert werden.

Direkt im Anschluß wird die feinzerkleinerte Maische in einem Wärmetauscher (Block 10) auf Temperaturen zwischen etwa + 4 und + 15 °C angewärmt und dann mit Hilfe eines Dekanters (Block 11) entsaftet, wobei Ananassaft (Block 13) und ein Trester (Block 12) entstehen. Der Trester kann unter Zusatz von Enzymen in einer weiteren Stufe (nicht gezeigt) nachentsaftet werden.

Der erzeugte Ananassaft (Block 13) wird sofort pasteurisiert und gekühlt. Zur weiteren Haltbarmachung wird der Saft in Fässern eingefroren oder in aseptischen Gebinden verpackt (Block 14).

Alternativ kann der Ananassaft (Block 13) durch Eindampfen konzentriert (Block 15) und daran anschließend in Fässern eingefroren oder in aseptischen Gebinden verpackt werden (Block 16).

## Patentansprüche

1. Verfahren zur Herstellung von Ananassaft, mit den Schritten:
- Entfernen der Blattkrone von den Ananasfrüchten;
- partielles Frieren von einer Randschicht der Früchte;
- Abschälen der gefrorenen Randschicht der Früchte; und
- Entsaften der Früchte zur Gewinnung von Ananassaft.

2. Verfahren nach Anspruch 1, bei dem das partielle Frieren der Randschicht der Ananasfrüchte kontinuierlich in einem Gefriertunnel unter Verwendung von kryogenen Gasen erfolgt.

3. Verfahren nach Anspruch 1, bei dem das partielle Frieren der Randschicht der Ananasfrüchte batchweise in einem Batchfroster unter Verwendung von kryogenen Gasen erfolgt.

4. Verfahren nach Anspruch 1, bei dem das partielle Frieren der Randschicht der Ananasfrüchte batchweise in einem Gefrierlager mit einem Kälteaggregat erfolgt.

5. Verfahren nach einem der vorhergehenden Ansprüche, bei dem das Abschälen der gefrorenen Randschicht der Ananasfrüchte mittels einer Rorundwalzenschälmaschine erfolgt.

6. Verfahren nach einem der vorhergehenden Ansprüche, bei dem die Ananasfrüchte nach dem Abschälen der Randschicht durch Verwendung einer Reibe, einem Wolf oder einer Obstmühle zu einer Grob-Maische verarbeitet werden.

7. Verfahren nach Anspruch 6, bei dem die Grob-Maische durch Homogenisierung feinzerkleinert wird.

8. Verfahren nach Anspruch 6 oder 7, bei dem aus der Maische durch ein mechnisches Trennverfahren ein Ananassaft erzeugt wird.

9. Verfahren nach einem der vorhergehenden Ansprüche, bei dem der erzeugte Ananassaft pasteurisiert und abgepackt wird.

10. Verfahren nach einem der vorhergehenden Ansprüche, bei dem der erzeugte Ananassaft zu Ananassaftkonzentrat konzentriert und abgepackt wird.

11. Verfahren nach einem der Ansprüche 6 bis 10, bei dem die Schritte der Maische-Erzeugung, der Homogenisierung, der Entsaftung und der Pasteurisation kontinuierlich durchgeführt werden.

## Claims

1. Method of producing pineapple juice, with the steps:
- removing the leaf top from the pineapples;
- partially freezing an edge layer of the fruit;
- peeling off the frozen edge layer of the fruit; and
- extracting the juice from the fruit to obtain pineapple juice.

2. Method according to claim 1, wherein the partial freezing of the edge layer of the pineapples is performed continuously in a freezing tunnel using cryogenic gases.

3. Method according to claim 1, wherein the partial freezing of the edge layer of the pineapples is performed batchwise in a batch froster using cryogenic gases.

4. Method according to claim 1, wherein the partial freezing of the edge layer of the pineapples is performed batchwise in a freezer store with a refrigeration unit.

5. Method according to any of the preceding claims wherein the frozen edge layer of the pineapples is peeled off by means of a corundum roller peeling machine.

6. Method according to any of the preceding claims wherein, after the edge layer has been peeled off, the pineapples are processed into a coarse mash using a grater, a shredder or a fruit crusher.

7. Method according to claim 6, wherein the coarse mash is finely size-reduced by homogenisation.

8. Method according to claim 6 or 7, wherein pineapple juice is produced from the mash by mechanical separation.

9. Method according to any of the preceding claims, wherein the pineapple juice produced is pasteurised and packaged.

10. Method according to any of the preceding claims, wherein the pineapple juice produced is concentrated into a pineapple juice concentrate and packaged.

11. Method according to any of claims 6 to 10, wherein the steps of mash production, homogenisation, juice extraction and pasteurisation are carried out continuously.

## Revendications

1. Procédé de fabrication de jus d'ananas, comprenant les étapes suivantes :
- coupe de la couronne de feuilles sur les fruits d'ananas ;
- congélation partielle d'une couche périphérique des fruits ;
- épluchage de la couche périphérique congelée des fruits ; et
- pressage des fruits pour en extraire le jus d'ananas.

2. Procédé selon la revendication 1, dans lequel la congélation partielle de la couche périphérique des ananas est effectuée en continu dans un tunnel de congélation sous utilisation de gaz cryogènes.

3. Procédé selon la revendication 1, dans lequel la congélation partielle de la couche périphérique des ananas est effectuée par lots dans un congélateur pour lots sous utilisation de gaz cryogènes.

4. Procédé selon la revendication 1, dans lequel la congélation partielle de la couche périphérique des ananas est effectuée par lots dans un entrepôt de congélation équipé d'un groupe de congélation.

5. Procédé selon une des revendications précédentes, dans lequel l'épluchage de la couche périphérique congelée des ananas est effectué au moyen d'une éplucheuse munie de cylindres au corindon.

6. Procédé selon une des revendications précédentes, dans lequel, après l'épluchage de la couche périphérique, les ananas sont soumis à un traitement utilisant une râpe, un hachoir ou un moulin à fruits pour obtenir un moût grossier.

7. Procédé selon la revendication 6, dans lequel le moût grossier est broyé par homogénéisation.

8. Procédé selon la revendication 6 ou 7, **caractérisé en ce qu'**un jus d'ananas est produit à partir du moût au moyen d'un procédé de séparation mécanique.

9. Procédé selon une des revendications précédentes, dans lequel le jus d'ananas fabriqué est pasteurisé et conditionné.

10. Procédé selon une des revendications précédentes, dans lequel le jus d'ananas fabriqué est concentré pour obtenir un concentré de jus d'ananas et est conditionné.

11. Procédé selon une des revendications 6 à 10, dans lequel les étapes de l'obtention du moût, de l'homogénéisation, du pressage et de la pasteurisation sont effectuées en continu.
